(19) Europäisches Patentamt
European Patent Office
Office européen des brevets

(11) **EP 3 837 498 B1**

(12) **EUROPÄISCHE PATENTSCHRIFT**

(45) Veröffentlichungstag und Bekanntmachung des Hinweises auf die Patenterteilung:
**12.10.2022 Patentblatt 2022/41**

(21) Anmeldenummer: **19756332.3**

(22) Anmeldetag: **12.08.2019**

(51) Internationale Patentklassifikation (IPC):
**G01D 18/00** (2006.01)   **G01D 5/22** (2006.01)
**G01R 31/28** (2006.01)

(52) Gemeinsame Patentklassifikation (CPC):
**G01D 18/00; G01D 5/2266;** G01D 2218/10

(86) Internationale Anmeldenummer:
**PCT/EP2019/071625**

(87) Internationale Veröffentlichungsnummer:
**WO 2020/035463 (20.02.2020 Gazette 2020/08)**

(54) **VERFAHREN ZUM TESTEN EINES SENSORS**

METHOD FOR TESTING A SENSOR

PROCÉDÉ DE TEST POUR UN CAPTEUR

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **15.08.2018 DE 102018213725**

(43) Veröffentlichungstag der Anmeldung:
**23.06.2021 Patentblatt 2021/25**

(73) Patentinhaber: **Continental Automotive Technologies GmbH**
**30165 Hannover (DE)**

(72) Erfinder: **LEHMANN, Sören**
**60488 Frankfurt am main (DE)**

(74) Vertreter: **Continental Corporation**
**c/o Continental Teves AG & Co. OHG**
**Intellectual Property**
**Guerickestraße 7**
**60488 Frankfurt a. Main (DE)**

(56) Entgegenhaltungen:
EP-A2- 2 707 731     GB-A- 2 043 258
JP-A- 2011 017 563     US-A1- 2012 032 768
US-A1- 2017 016 948

**Beschreibung**

Die Erfindung betrifft ein Verfahren zum Testen eines Sensors, eine Vorrichtung zum Durchführen des Verfahrens und den Sensor.

Sensoren werden, insbesondere in der Kraftfahrzeugbranche, häufig in sicherheitskritischen Bereichen eingesetzt und sollten daher bei ungewöhnliche Zuständen, beispielsweise ausgelöst durch mechanische Beschädigung, Materialermüdung, einen Kurzschluss oder Ähnliches, ihre Funktion beibehalten oder zumindest erkennen können, dass ein fehlerhafter Zustand vorliegt.

Eine bekannte Möglichkeit, die Sicherheit von Sensoren zu erhöhen, besteht darin, für die Messung relevante Komponenten des Sensors redundant auszuführen, so dass ein Fehler einer Komponente durch die redundante Komponente kompensiert werden kann. Dies erhöht zwar in Bezug auf viele sicherheitskritische Einflüsse auf den Sensor die Sicherheit, lässt aber andere sicherheitskritische Einflüsse außen vor. So kann es vorkommen, dass sich Fehler auf eine Komponente und deren redundante Komponente auf die gleiche Weise auswirken und die sicherheitserhöhende Wirkung der Redundanz aufgehoben wird.

Beispielsweise ist es denkbar, dass ein Sensor einen Differenztransformator mit einer Primärspule und zumindest zwei Sekundärspulen aufweist, wobei die Sekundärspulen durch einen Geber beeinflusst werden, so dass dessen Position wiedergegeben wird. Messtechnisch ist dabei zumindest eine Stelle des Messbereichs für den Sensor nicht von dem Fall unterscheidbar, dass der Geber entfernt wurde oder unwirksam ist. Eine redundante Ausführung der Sekundärspulen ändert daran jedoch nichts. Es besteht daher ein Bedarf, die Sicherheit von Sensoren zusätzlich oder mittels eines alternativen Verfahrens zu erhöhen.

EP 2 707 731 A2 ist ein Verfahren gezeigt, bei dem die Spannungen der Sekundärspulen mit Grenzwerten verglichen werden eine Fehlfunktion zu erfassen. Zusätzlich kann ein Quotient der Spannungen der Sekundärspulen oder eine Summe der Spannungen der Sekundärspulen mit einem Referenzwert verglichen werden.

Es ist Aufgabe der Erfindung ein Verfahren anzugeben, das die Sicherheit eines Sensors erhöht und dabei robust ist und wenig Aufwand erfordert.

Die Aufgabe wird durch die Merkmale der unabhängigen Ansprüche gelöst. Bevorzugte Weiterbildungen sind Gegenstand der abhängigen Ansprüche.

Gemäß einem Aspekt der Erfindung umfasst ein Verfahren zum Testen eines Sensors mit einer Primärinduktivität, die von einer jeweils induktiv mit der Primärinduktivität gekoppelten ersten und zweiten Sekundärinduktivität galvanisch getrennt ist, die Schritte:

- berechnen eines Sensorausgangssignals, wobei das Sensorausgangssignal von der Kopplung zwischen der Primärinduktivität und der ersten Sekundärinduktivität sowie zwischen der Primärinduktivität und der zweiten Sekundärinduktivität abhängig ist,
- Bestimmen einer von dem Sensorausgangssignal verschiedenen ersten elektrischen Größe, insbesondere eines Zusatzsignals, des Sensors,
- Vergleichen der ersten elektrischen Größe mit einem ersten Grenzwert, um zu bestimmen, ob der Sensor sich in einem fehlerhaften Zustand befindet.

Entweder wird die Primärinduktivität durch einen Wechselstromgenerator gespeist, wobei die erste elektrische Größe durch den Betrag der an der Primärinduktivität auftretenden , insbesondere komplexwertigen, Spannung gebildet wird, oder die Primärinduktivität wird durch einen Wechselspannungsgenerator gespeist, wobei die erste elektrische Größe durch den Betrag des durch die Primärinduktivität fließenden, insbesondere komplexwertigen, Stroms gebildet wird.

Die elektrische Größe ist dabei als eine bestimmte im Sensor auftretende elektrische Größe zu verstehen, nicht etwa allgemein im Sinne einer Unterscheidung zwischen Spannung und Strom. Beispielsweise kann das Sensorausgangssignal als Spannung ausgebildet sein und die davon verschiedene erste elektrische Größe ebenfalls, allerdings eine Spannung mit anderen Abgriffspunkten. Entsprechend kann die elektrische Größe, da sie als Testgröße in Form eines Signals verarbeitet wird, auch als Zusatzsignal bezeichnet werden, wobei das Zusatzsignal auch ein Signal sein kann, das beim Betrieb des Sensors ohne das angegebene Verfahren zum Testen eines Sensors verarbeitet würde.

Indem die erste elektrische Größe von dem Sensorausgangssignal verschieden ist, wird dem Fall vorgebeugt, dass sich trotz eines fehlerhaften Zustandes ein plausibles Sensorausgangssignal ergibt. Der Vergleich mit einem Grenzwert erlaubt dabei eine präzise Anpassung an das Sicherheitserfordernis des Sensors, da ein solcher Grenzwert beliebig gewählt bzw. programmiert werden kann.

Einer vorteilhaften Ausführungsform entsprechend, kann das Verfahren in einem einzelnen Sensor für verschiedene und / oder für verschiedene Kombinationen der genannten möglichen elektrischen Größen durchgeführt werden. Dies kann zeitlich hintereinander oder parallel erfolgen.

Vorzugsweise wird eine zweite elektrische Größe mit einem zweiten Grenzwert verglichen, um zu bestimmen, ob der Sensor sich in einem fehlerhaften Zustand befindet.

Es ist bevorzugt, dass das Sensorausgangssignal verwendet wird, um die Information, ob der Sensor sich in einem fehlerhaften Zustand befindet, zu plausibilisieren.

Zur Plausibilisierung des Zustands des Sensors wird vorzugsweise ausgewertet, ob innerhalb der möglichen Werte des Sensorausgangssignals im Messbereich des Sensors das Sensorausgangssignal einem Wert aus einem zusammenhängenden Teilbereich dieser Werte entspricht. Vorzugsweise erfolgt das Bestimmen einer von dem Sensorausgangssignal verschiedenen ersten elektrischen Größe des Sensors und das Vergleichen der ersten elektrischen Größe mit einem ersten Grenzwert nur dann, wenn das Sensorausgangssignal einem Wert aus dem zusammenhängenden Teilbereich entspricht.

Der Teilbereich schließt vorzugsweise die Mitte des Messbereichs des Sensors ein und ist vorzugsweise zur Mitte spiegelsymmetrisch ausgedehnt, wobei der Teilbereich insbesondere weniger als 40%, vorzugsweise weniger als 30% des Messbereichs einnimmt.

Es ist bevorzugt, dass der Grenzwert oder zumindest einer der Grenzwerte durch einen über den Messbereich des Sensors konstanten Wert gebildet wird, der zwischen dem Wert der ersten elektrischen Größe im Fall eines fehlerhaften Zustands und allen oder den durch den Teilbereich eingegrenzten Werten der elektrischen Größe im Fall eines nicht fehlerhaften Zustands liegt.

Es ist bevorzugt, dass die jeweilige elektrische Größe auf ihren innerhalb des Messbereichs des Sensors maximal möglichen Wert bezogen wird. Wie hoch dieser Wert ist, hängt beispielsweise von den Eigenschaften der elektrischen Komponenten des Sensors ab

Es entspricht einer bevorzugten Ausführungsform, dass zum Berechnen des Sensorausgangssignals die Signale, insbesondere Spannungen, der ersten und zweiten Sekundärinduktivität voneinander subtrahiert werden.

Bevorzugt wird das Sensorausgangssignal berechnet, indem die voneinander subtrahierten Wechselgrößen, insbesondere Wechselspannungen, der Sekundärinduktivitäten beziehungsweise Signale eine weitere Wechselgröße, insbesondere Wechselspannung, bilden, deren Amplitude mittels eines phasenempfindlichen Gleichrichters gleichgerichtet wird oder indem die voneinander subtrahierten Beträge der Wechselgrößen der Sekundärinduktivitäten, insbesondere Sekundärspannungen, beziehungsweise der Signale durch die Summe dieser Beträge dividiert werden.

Gemäß einem weiteren Aspekt der Erfindung ist eine Vorrichtung eingerichtet, eines der angegebenen Verfahren durchzuführen, wobei die Vorrichtung einen Speicher und einen Prozessor aufweist, wobei eines der angegebenen Verfahren in Form eines Computerprogramms in dem Speicher hinterlegt und der Prozessor zur Ausführung des Verfahrens ausgebildet ist, wenn das Computerprogramm aus dem Speicher in den Prozessor geladen ist.

Gemäß einem weiteren Aspekt der Erfindung umfasst ein Sensor einen, insbesondere magnetischen, Geber, eine Primärinduktivität, die von einer jeweils induktiv mit der Primärinduktivität gekoppelten ersten und zweiten Sekundärinduktivität galvanisch getrennt ist, sowie eine der angegebenen Vorrichtungen.

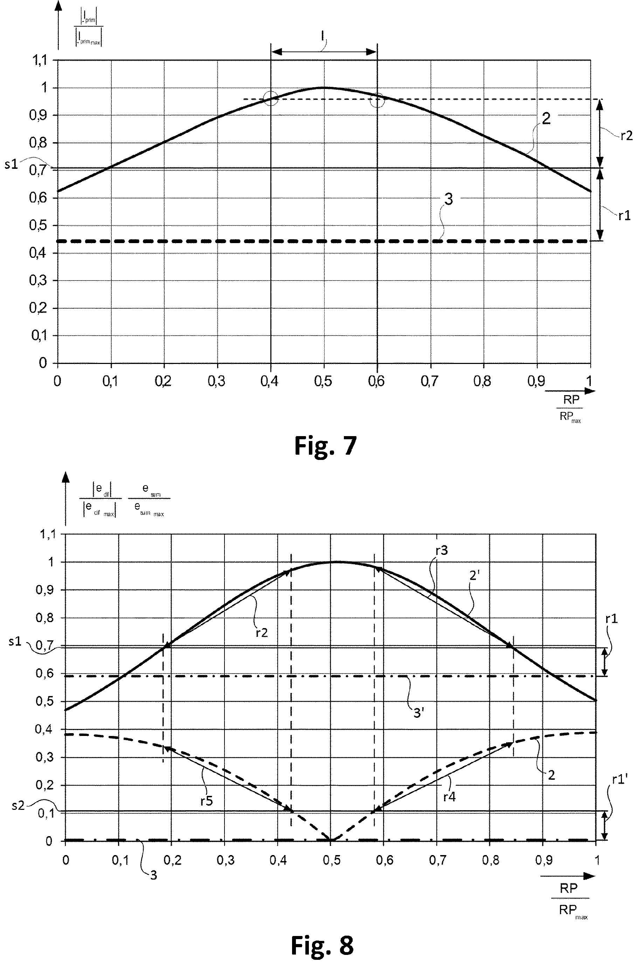

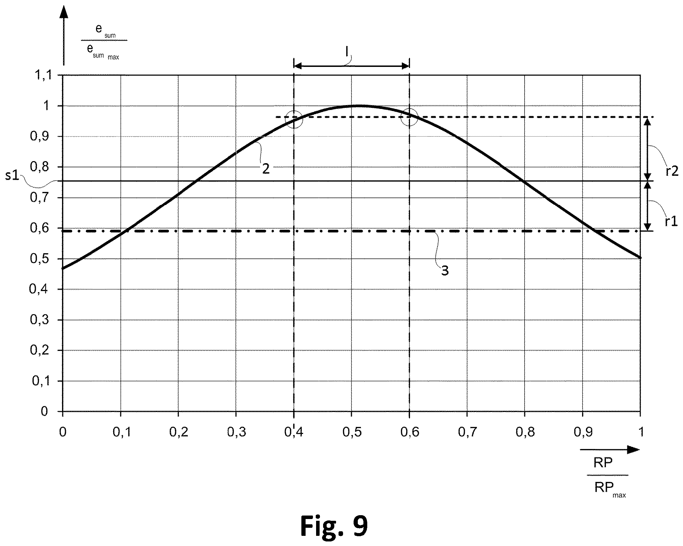

Die zuvor beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die im Zusammenhang mit den Zeichnungen näher erläutert werden. Es wird betont, dass die sogenannten Ausführungsbeispiele der Figuren 8 und 9 nicht in den Anwendungsbereich der beigefügten Ansprüche fallen, und keine Ausführungsformen der vorliegenden Erfindung sind.

Dabei zeigt

Fig. 1   einen stark schematisierten Sensor mit einem Differenztransformator,

Fig. 2   ein erstes Ausführungsbeispiel zur Ausführung des Sensors aus Fig. 1,

Fig. 3   ein zweites Ausführungsbeispiel zur Ausführung des Sensors aus Fig. 1,

Fig. 4   ein Diagramm, das den Verlauf einer bei einem Ausführungsbeispiel des erfindungsgemäßen Verfahrens verwendeten elektrischen Größe über den Messbereich des Sensors hinweg darstellt,

Fig. 5   ein Diagramm gemäß des in Fig. 4 dargestellten Ausführungsbeispiels, wobei das Sensorausgangssignal zur Plausibilisierung herangezogen wird,

Fig. 6   ein Diagramm, das den Verlauf einer bei einem weiteren Ausführungsbeispiel des erfindungsgemäßen Verfahrens verwendeten elektrischen Größe über den Messbereich des Sensors hinweg darstellt,

Fig. 7   ein Diagramm gemäß des in Fig. 6 dargestellten Ausführungsbeispiels, wobei das Sensorausgangssignal zur Plausibilisierung herangezogen wird,

Fig. 8   ein Diagramm, das den Verlauf zweier bei einem weiteren Ausführungsbeispiel des erfindungsgemäßen Verfahrens verwendeten elektrischen Größen über den Messbereich des Sensors hinweg darstellt,

Fig. 9   ein Diagramm, das den Verlauf einer bei einem weiteren Ausführungsbeispiel des erfindungsgemäßen Verfahrens verwendeten elektrischen Größe über den Messbereich des Sensors hinweg darstellt, wobei das Sensorausgangssignal zur Plausibilisierung herangezogen wird.

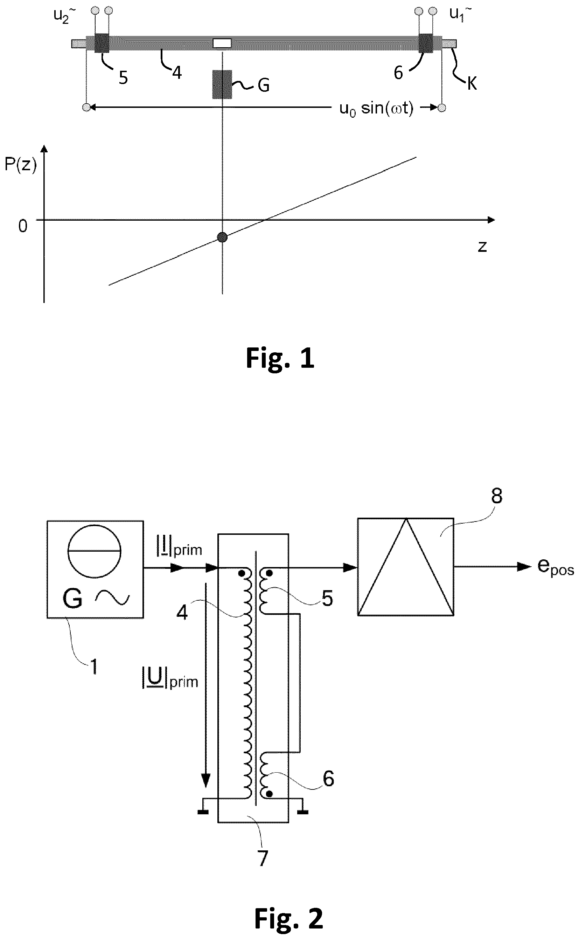

Es wird auf Fig. 1 Bezug genommen, die einen Sensor beispielhaft in Form eines Differenztransformator-Positionssensors darstellt. Dieser leitet die zu ermittelnde Messgröße, die Position eines Gebers G, aus der Differenz zweier durch eine Primärinduktivität 4 sekundärseitig induzierter Signale ab. Primärinduktivität 4 und Sekundärinduktivitäten 5 und 6 bilden also gemeinsam einen Übertrager 7. Wird ein Dauermagnet als Geber G verwendet, so sorgt dessen Magnetfeld für eine Sättigungszone im weichmagnetischen Kernmaterial K des Transformators, die ihrerseits die sekundärseitig induzierten Spannungen positionsproportional gewichtet. Im regulären Betrieb verändert also der verwendete Dauermagnet als Positionsgeber G in Abhängigkeit seiner Position über dem weichmagnetischen Magnetkern die Amplitude der in die Sekundärwicklungen 5, 6 induzierten Spannungen. Der Begriff der Wicklungen wird hier und nachfolgend als gleichbedeutend mit dem Begriff Induktivitäten verwendet. Befindet sich der Dauermagnet in der mechanischen Mitte des Transformators, also mit gleichem Abstand zu den beiden Sekundärwicklungen 5, 6, so sind, nach Betrag und Phase, beide Sekundärspannungen gleich groß und die Differenz ergibt sich zu Null.

Steht der Dauermagnet als Positionsgeber G im Fehlerfalle nicht mehr zur Verfügung, sei es weil er entmagnetisiert, mechanisch zerstört oder er sogar aus seiner mechanischen Positionsführung herausgefallen ist, so dass er nicht mehr auf den weichmagnetischen Kern magnetisch einwirken kann, so gibt der Sensor weiterhin einen Positionswert heraus, der in dieser Betriebssituation jedoch verfälscht ist. Konkret nehmen die beiden Sekundäramplituden der in die Sekundärwicklungen 5, 6 induzierten Größen nahezu gleiche Werte an, woraus sich unabhängig vom verwendeten Auswerteverfahren für die Position stets nahezu die Mittenposition des Sensormessbereichs ergibt.

Dieser Zustand, dass fälschlicherweise die Mittenposition als Sensorausgangssignal ausgegeben wird, ohne dass eine weitere Fehlerindizierung erfolgt, ist insbesondere bei Positionssensoren mit höheren oder gar höchsten Sicherheitsansprüchen zu vermeiden, da dieser Fehlerzustand einen sogenannten Fehler gemeinsamen Ursprungs darstellt, mit dem der Sensor, auch wenn er redundant ausgeführt sein sollte, nicht in der Lage ist, über das Positionssignal als Ausgangsgröße auf den Fehlerzustand hinzuweisen, da der abgefallene Magnet als gemeinsame Fehlergröße das Sensorsignal zunächst als plausibel und korrekt erscheinen lässt.

Ein geeignetes Test- bzw. Diagnoseverfahren, das derartige Defekte des Positionsgebers G zur Anzeige bringt, so dass beispielsweise ein Gesamtsystem in dem der fehlerhafte Sensor als Istwertgeber arbeitet, entsprechende Maßnahmen ableiten kann und insgesamt für eine erhöhte Sicherheit sorgt, ist mit dem erfindungsgemäßen Verfahren gegeben. Das Verfahren soll nachfolgend beispielhaft anhand zweier unterschiedlicher Sensortypen näher erläutert werden.

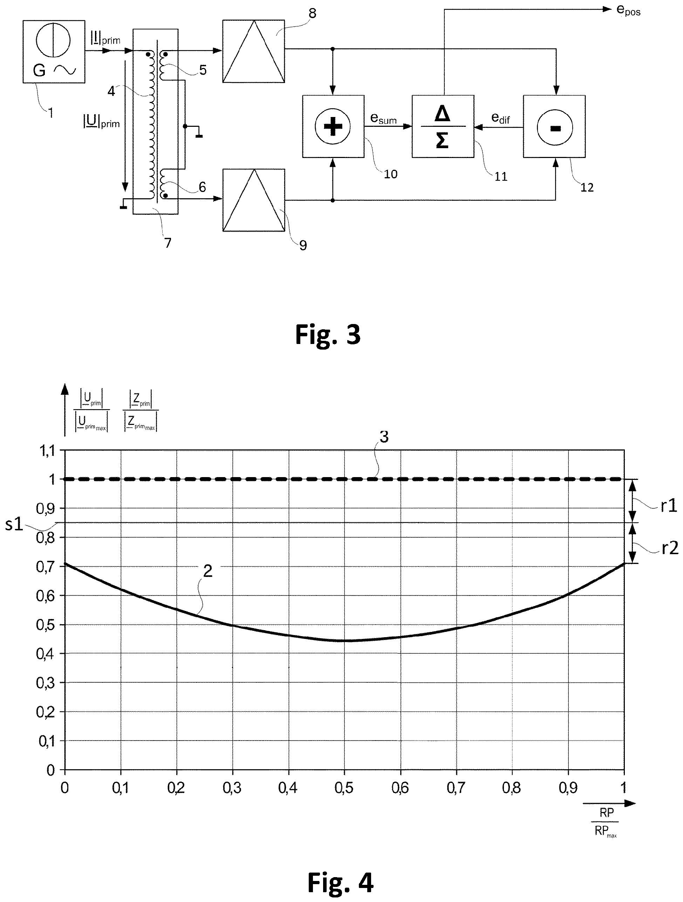

Die beiden in Fig. 2 und Fig. 3 dargestellten Sensortypen entsprechen dem Prinzip des in Fig. 1 dargestellten Differenztransformator- Positionssensors.

Der in Fig. 2 dargestellte Positionssensor nach Typ I zeichnet sich durch seine einfache Bauweise und unter anderem dadurch aus, dass dieser Positionssensor die Position mit Hilfe von subtraktiv verschalteten Sekundärwicklungen ermittelt. Durch die antiserielle Verschaltung der Sekundärwicklungen 5, 6 unter Berücksichtigung des Wickelsinns der jeweiligen Sekundärwicklung 5, 6 wird eine Subtraktion der induzierten Wechselgröße vorgenommen, wobei die Positionsinformation über den gesamten Messbereich nur fehlerfrei ermittelt werden kann, wenn Betrag und Phase der induzierten Sekundärsignale berücksichtigt werden. Die subtraktiv entstandene Wechselspannungsamplitude wird mit einem Amplitudendemodulator 8 gleichgerichtet, der als phasenempfindlicher Gleichrichter ausgeführt auch die Phasenkomponente berücksichtigt. Als Bezugsphasenlage wird in der Regel das Ansteuersignal der Primärwicklung herangezogen.

Positionsabhängige Phasenfehler des Übertragers 7 in Relation zur Bezugsphasenlage der Ansteuerung der Primärwicklung 1 haben beim Typ I-Sensor unmittelbar Einfluss auf die Genauigkeit der entstehenden Positionsinformation, die als Sensorausgangssignal epos am Ausgang des Demodulators 8 entsteht.

Für eine hinreichend linear verlaufende Positionskennlinie sollte beim Typ I- Sensor die primärseitig ansteuernde Quelle als Stromquelle konstanter Amplitude ausgeführt sein. Dies ist als nachteilig zu bewerten, denn im Vergleich zu einem Generator mit konstanter Spannungsamplitude ist der Schaltungsaufwand für eine Konstant-Wechselstromquelle in der Regel höher anzusetzen. Nachteilig ist weiterhin die direkte Abhängigkeit der Positionsgröße von der absoluten Amplitude des primärseitig ansteuernden Stroms. Um Ungenauigkeiten im Positionssignal zu vermeiden, ist eine bzgl. der Stromamplitude hochstabile Primärquelle erforderlich. Eine Kompensation durch ratiometrische Arbeitsweise existiert beim Typ I-Sensor diesbezüglich nicht. Da es der Typ I- Sensor aufgrund seines einfachen Aufbaus kaum ermöglicht, im Messprozess entstehende systematische Fehler zu kompensieren, sollte er nur für einfachere Anwendungen mit niedrigen Anforderungen eingesetzt werden.

Positionssensoren vom Typ II, wie in Fig. 3 dargestellt, unterscheiden sich in erster Linie von dem vorgenannten Typ I-Sensor in der Art und Weise der Auswertung der Sekundärsignale. Es werden zwei Amplitudendemodulatoren 8, 9 eingesetzt, die selektiv für jede Sekundärwicklung 5, 6 den Betrag der in die Sekundärwicklung 5, 6 induzierten Wechselspannung bilden. Die Phaseninformation kann entfallen. Die Weiterverarbeitung der erhaltenen Beträge der Sekundäramplituden zur Positionsinformation geschieht durch Anwendung der arithmetischen Operationen einer Differenzbildung 12 und einer Summenbildung 10. Mit der Bildung des Quotienten 11 aus Differenzsignal edif und Summensignal esum der Beträge erhält man schließlich das Positionssignal epos. Vielfach erfolgt die Signalverarbeitung ab den Eingängen der Amplitudendemodulatoren 8, 9 rein digital. Hierdurch sind Typ II-Positionssensoren besonders driftarm bei Änderungen der Umgebungstemperatur und zudem besonders langzeitstabil. Der erhöhte Aufwand beim Typ II-Sensor beinhaltet noch weitere Vorteile:

Als Ansteuersignalquelle 1 der Primärwicklung kann ohne Nachteile ein einfach zu gestaltender Wechselspannungsgenerator mit vorzugsweise konstanter Amplitude eingesetzt werden. Dies ist möglich, weil mit der Quotientenbildung 11 eine Normierung auf die Summenamplitude für jeden einzelnen Messpunkt auf der Positionsachse vorgenommen wird. Dadurch erhält man die Vorteile, dass die Primäramplitude keinen Einfluss mehr auf den erhaltenen Positionswert epos ausüben kann. Zudem trägt das angewendete Normierverfahren trotz verwendeter Primärspannungsquelle zu einer deutlichen Kennlinien-Linearisierung bei.

Mit den Größen esum und edif stehen, neben der Positionsinformation, ohne dass Zusatzkosten entstanden sind, weitere Größen zur Verfügung, die für Diagnosezwecke herangezogen werden können.

Sensoren vom Typ II eignen sich aufgrund der Unabhängigkeit von der absoluten Primäramplitude, sowie den nicht ausgewerteten Phaseninformationen, die dadurch auch keinen Fehlerbeitrag leisten können, für Anwendungen mit erhöhten Anforderungen.

Nachfolgend soll für die Sensorentypen I und II jeweils erläutert werden, wie mit Hilfe des erfindungsgemäßen Verfahrens die Sicherheit des Sensors erhöht und insbesondere das in Zusammenhang mit Fig. 1 geschilderten Problem behoben werden kann.

Es wird Bezug genommen auf Fig. 4. Ein Typ I-Positionssensor gemäß Fig. 2 verfügt in seiner Grundausführung über nur eine Ausgabegröße - das Sensorausgangssignal epos, das die Position des Gebers G wiedergibt. Da dieses Positionssignal alleine nicht ausreichend ist um den Fehlerzustand zu erfassen, weil die Größe epos im Fehlerfall mit der Mittenposition einen Wert annimmt, der Teil des Wertebereichs im regulären, fehlerfreien Betrieb ist, soll erfindungsgemäß zumindest eine vom Fehlerzustand beeinflusste Größe herangezogen werden, die sodann, gegebenenfalls im Verbund mit dem Positionssignal, als unterstützende Größe eine eindeutige Aussage über den Fehlerzustand erlaubt.

Beim mit Strom konstanter Amplitude gespeisten Typ I-Positionssensor bildet der Betrag der an der Primärwicklung entstehenden komplexwertigen Spannung |Uprim| eine solche elektrische Größe, die zum Testen des Sensors herangezogen werden kann. Bei konstantem Strom nimmt sie einen deterministischen Verlauf im regulären, deshalb fehlerfreien Betrieb an und weist vor allen Dingen auch einen deutlich anderen (Funktions-) Wert im Fehlerfall auf, denn die Spannung |Uprim| ist dann gerade maximal, wobei der Maximalwert im regulären Betrieb nicht erreicht wird. Diese Unterschiede der Spannung |Uprim| zwischen fehlerfreiem und fehlerbehaftetem Betrieb schaffen die Voraussetzung für eine geeignete Erkennung des Fehlerfalles.

Den typischen Funktionsverlauf der entstehenden Größen zeigt Fig. 4 mit der an einem Übertrager erfassten normierten Primärspannung als Funktion der normierten Referenzposition für den regulären, fehlerfreien Betrieb 2, sowie gestrichelt den Funktionsverlauf bei defektem, deshalb in diesem Beispiel fehlendem Magneten als Positionsgeber G im Funktionsverlauf 3. Der Spannungsverlauf 2, 3 kann bei konstantem Strom aus dem Scheinwiderstand des Übertragers abgeleitet werden, wobei in diesem Beispiel in erster Linie Magnetisierungsenergie der Primärinduktivität aufgebracht werden muss, da der Übertrager sekundärseitig lastfrei betrieben werden soll. Der Impedanzverlauf ist bei konstantem Strom und normierter Darstellung identisch mit dem Spannungsverlauf und ist in Fig. 4 mit angegeben. Die normierte Darstellung dient dem vereinfachten Vergleich mit den nachfolgend noch aufgezeigten Kennlinienfeldern.

Das Testverfahren für den Typ I-Positionssensor lässt sich nun dadurch realisieren, indem mit einem Wert- oder Spannungsvergleicher die Größe des Betrages der Spannung an der Primärwicklung |Uprim| zunächst erfasst und mit einem Grenzwert verglichen wird. Hierzu ist beispielhaft mit dem Grenzwert s1 als Entscheiderschwelle in Fig. 4 der Grenzwert für den Spannungsvergleicher geschaffen worden, für den bezüglich des Fehlerzustandes gilt:

Ist der Betrag der normierten Spannung größer als der Grenzwert s1 der Entscheiderschwelle, so befindet sich das Typ I-Sensorsystem im Fehlerzustand.

Ist der Betrag der normierten Spannung kleiner als der Grenzwert s1 der Entscheiderschwelle, so befindet sich das Typ I-Sensorsystem im regulären, fehlerfreien Betriebszustand.

Mit der Diagnose-Reserve r1 in Fig. 4 wird der Sicherheitsabstand der normierten Primärspannung bezüglich einer trotz Fehlerzustands ausbleibenden Fehleranzeige angegeben. Mit der Diagnose-Reserve r2 wird entsprechend der Sicherheitsabstand der normierten Primärspannung bezüglich einer Fehleranzeige trotz regulären Betriebs angegeben. Für eine möglichst robuste Arbeitsweise des Verfahrens sollten die Diagnose-Reserven r1, r2 beide möglichst groß ausfallen. Da sich jedoch beide Größen invers zueinander verhalten, ist hierbei stets ein Kompromiss einzugehen.

Eine deutliche Vergrößerung beider Diagnose-Reserven r1, r2 aus Fig. 4 und somit eine deutlich robustere Arbeitsweise lässt sich mit einem ähnlichen aber erweiterten Diagnoseverfahren erzielen, indem das Sensorausgangssignal epos, das die zu erfassende Position angibt, als weitere Plausibilisierungsinformation mit einbezogen wird. Mit der Kenntnis, dass bei den hier behandelten Fehlerzuständen im Fehlerfall das Sensorausgangssignal epos stets nahezu die mittlere Position des gesamten Messbereichs anzeigt, kann der Bereich in Fig. 4 für den die Entscheiderschwelle aktiv, bzw. empfindlich geschaltet wird eingegrenzt werden auf Werte des Sensorausgangssignals, die sich in der Mitte des Messbereichs, ergänzt um positive- und negative Toleranzen, befinden, wobei nachfolgend gelten soll:

$$epos = \frac{RP}{RP_{max}}$$

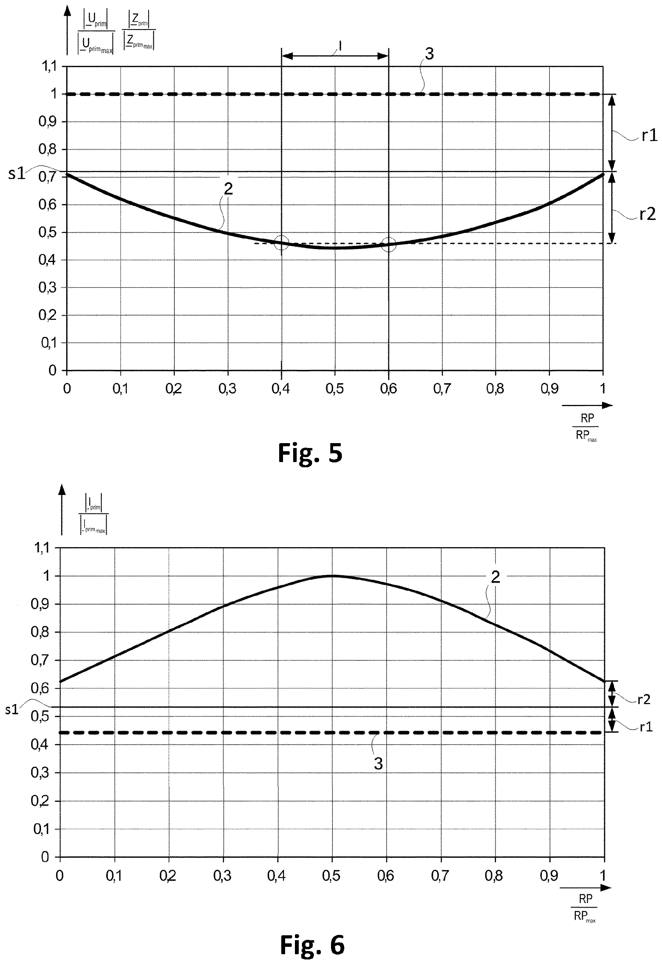

Dies ist in Fig. 5 dargestellt. Unter sonst gleichen Bedingungen wie zuvor, kennzeichnet der Teilbereich I das Intervall bzw. den Wertebereich, für den der Spannungsvergleicher der normierten Spannung ausschließlich aktiv geschaltet wird und einen Fehlerzustand zur Anzeige bringen kann. Für die übrigen Positionsbereiche des Sensorausgangssignals epos außerhalb des Teilbereichs I ist die Fehleranzeige der entsprechenden Vorrichtung des Sensors, bzw. Diagnoseeinrichtung, inaktiv. Die positive Folge dieses Verfahrens wird mit Fig. 5 auf grafische Weise verdeutlicht: Durch die Einschränkung des Diagnosebereichs vom vollständigen Messbereich des Sensors, deshalb

$$epos = \frac{RP}{RP_{max}} \in [0;\ 1]$$

auf den begrenzten Teilbereich von

$$epos = \frac{RP}{RP_{max}} \in [0{,}4;\ 0{,}6]$$

kann der Grenzwert s1 deutlich abgesenkt werden, ohne dass die Diagnose-Reserve r2 davon beeinträchtigt wird. Dies ist darauf zurückzuführen, dass die untere Grenze der Diagnose-Reserve r2 nun nicht mehr von dem größten Funktionswert der normierten Primärspannung bestimmt wird, sondern nunmehr von den größten Funktionswerten innerhalb des durch den Teilbereich I festgelegten Intervalls des Sensorausgangssignals. Diese liegen hinsichtlich ihrer Absolutwerte deutlich niedriger und werden von den Schnittpunkten der Primärspannungsfunktion mit den Lotgrenzen des Teilbereichs gebildet. In Fig. 5 sind diese Schnittpunkte umkreist dargestellt.

Bezüglich der Erkennung, ob der Sensor sich in einem fehlerhaften Zustand befindet gilt mit dem in Fig. 5 dargestellten Grenzwert s1:
Befindet sich das Sensorausgangssignal epos innerhalb des Teilbereichs I und der Betrag der normierten Spannung ist größer als der Grenzwert s1, so befindet sich der Sensor im fehlerhaften Zustand.

Befindet sich das Sensorausgangssignal epos innerhalb des Teilbereichs I und der Betrag der normierten Spannung ist kleiner als der Grenzwert s1, so befindet sich der Sensor im regulären, fehlerfreien Zustand.

Indem das Sensorausgangssignal epos verwendet wird, um die Information, ob der Sensor sich in einem fehlerhaften Zustand befindet, zu plausibilisieren, sind die beiden Diagnose-Reserven r1, r2 gegenüber den erzielten Größen in Fig. 4 deutlich größer geworden, woraus eine Robustheitssteigerung des Diagnoseverfahrens resultiert.

Die zuvor beschriebenen Ausführungsbeispiele für den Positionssensor Typ I benötigen zur Gewinnung der Testgröße |Uprim| stets zusätzlichen Schaltungsaufwand. Die nachfolgend beschriebenen Ausführungsbeispiele in Bezug auf den Positionssensor Typ II haben den Vorteil, dass dieser zusätzliche Aufwand größtenteils vermieden wird.

Der Typ II- Positionssensor gemäß Fig. 3 verfügt aufgrund seines aufwändigeren, diskreten Aufbaus grundsätzlich über vielfältigere Plausibilisierungsmöglichkeiten als der Typ I- Sensor. Dennoch sollen zunächst, in weiteren Ausführungsbeispielen, ähnliche Diagnoseverfahren wie zuvor, jedoch angepasst an den Systemaufbau des Typ II- Sensors, aufgezeigt werden, die ähnlich wie bei Typ I externe Schaltungsperipherie erfordern.

Der Positionssensor Typ I unterscheidet sich primärseitig vom Typ II-Sensor vorrangig durch die speisende Quelle. Daher liegt es nahe, ähnliche Verfahren zur Diagnose eines Positionsgeberdefekts zu erarbeiten, wie sie bereits für den Typ I- Sensor dargestellt wurden, jedoch nun angepasst an die speisende Quelle des Typ II- Sensors, die durch die Wechselspannungsquelle 1 konstanter Amplitude aus Fig. 3 repräsentiert wird. Wird zunächst auch beim Typ II-Sensor angenommen, dass nur eine Ausgabegröße zur Verfügung steht, das Sensorausgangssignal epos, so ist dieses Signal auch hier nicht alleine ausreichend um den Fehlerzustand, hervorgerufen durch einen defekten Positionsgeber G, zu erfassen. Auch beim Typ II-Sensor nimmt die Größe epos im Fehlerfall mit der Mittenposition einen Wert an, der Teil des Wertebereichs im regulären, fehlerfreien Betrieb ist, so dass die Größe epos für Plausibilisierungszwecke alleine ausscheidet.

Es sollen in den nachfolgend vorgestellten Diagnoseverfahren erneut weitere vom Fehlerzustand beeinflusste Größen herangezogen werden, die sodann im Verbund mit dem Positionssignal als unterstützende Größe eine eindeutige Aussage über den Fehlerzustand erlauben. Beim mit Spannung konstanter Amplitude gespeisten Typ II-Positionssensor ergibt sich diese zusätzliche Plausibilisierungsgröße beispielsweise mit dem Betrag des durch die Primärwicklung fließenden komplexwertigen Stroms |Iprim|, der bei konstanter Spannung einen deterministischen Verlauf im regulären, das heißt fehlerfreien Betrieb annimmt und einen deutlich anderen (Funktions-) Wert im Fehlerfall aufweist, denn dann ist der Strom |Iprim| nämlich gerade minimal, wobei der Minimalwert im regulären Betrieb nicht erreicht wird. Diese Unterschiede des Stroms |Iprim| zwischen fehlerfreiem und fehlerbehaftetem Betrieb schaffen die Voraussetzung für eine geeignete Plausibilisierungsmöglichkeit des Fehlerfalles beim Typ II-Sensor.

Den typischen Funktionsverlauf der entstehenden Größen zeigt Fig. 6 mit dem am Übertrager erfassten normierten Primärstrom als Funktion der normierten Referenzposition für den regulären, fehlerfreien Betrieb 2, sowie den Funktionsverlauf 3 bei defektem Sensor, deshalb in diesem Beispiel bei fehlendem Magneten als Positionsgeber G. Die normierte Darstellung dient erneut dem vereinfachten Vergleich mit den nachfolgend noch aufgezeigten Kennlinienfeldern. Die Diagnoseeinrichtung für den Typ II-Positionssensor lässt sich nun analog zum Typ I-Sensor realisieren, indem mit einem Wert- oder Stromvergleicher die Größe des Betrages des Stroms durch die Primärwicklung |Iprim| zunächst erfasst und mit einem Grenzwert s1 verglichen wird. Hierzu ist beispielhaft mit dem Grenzwert s1 als Entscheiderschwelle in Fig. 6 der Grenzwert für den Stromvergleicher geschaffen worden für den bezüglich der Erkennung eines Fehlerzustandes gilt:
Ist der Betrag des normierten Stroms größer als der Grenzwert s1, so befindet sich der Sensor im regulären, fehlerfreien Betriebszustand.

Ist der Betrag des normierten Stroms kleiner als der Grenzwert s1, so befindet sich der Sensor im fehlerhaften Zustand.

Mit der Diagnose-Reserve r2 in Fig. 6 wird wiederum der Sicherheitsabstand des normierten Primärstroms bezüglich einer Fehleranzeige trotz regulären Betriebs angegeben. Mit der Diagnose-Reserve r1 wird entsprechend der Sicherheitsabstand des normierten Primärstroms bezüglich einer ausbleibenden Fehleranzeige trotz Fehlerzustands angegeben. Für eine möglichst robuste Arbeitsweise des Verfahrens sollten die Diagnose-Reserven r2, r1 wiederum beide möglichst groß ausfallen. Erneut verhalten sich beide Größen invers zueinander und es ist wieder ein Kompromiss bzgl. der Lage der Entscheiderschwelle in Form des Grenzwerts s1 einzugehen.

Auch beim Typ II-Sensor lässt sich gegenüber dem Ausführungsbeispiel der Fig. 6 eine Vergrößerung beider Diagnose-Reserven r2, r1 und somit eine robustere Arbeitsweise erreichen, indem neben dem Betrag der durch die Primärinduktivität fließenden Strom |Iprim| zusätzlich wiederum noch das Sensorausgangssignal epos als weitere Plausibilisierungsinformation herangezogen wird. Mit der Kenntnis, dass bei den hier behandelten Fehlerzuständen im Fehlerfall das Sensorausgangssignal epos stets nahezu die mittlere Position des gesamten Messbereichs anzeigt, kann der Bereich für den die Entscheiderschwelle aktiv, bzw. empfindlich geschaltet wird erneut eingegrenzt werden auf Werte des Sensorausgangssignals epos, die sich in der Mitte des Messbereichs, ergänzt um positive und negative Toleranzen, befinden. Dies ist in Fig. 7 dargestellt.

Unter sonst gleichen Bedingungen wie zuvor, kennzeichnet der Teilbereich I den Wertebereich, für den der Stromvergleicher des normierten Stroms ausschließlich aktiv geschaltet wird und einen Fehlerzustand zur Anzeige bringen kann. Für die übrigen Positionsbereiche von epos außerhalb des Teilbereichs I ist die Fehleranzeige der Diagnoseeinrichtung inaktiv. Die positive Folge dieser Weiterbildung wird in Fig. 7 auf grafische Weise deutlich. Durch die Einschränkung des Diagnosebereichs vom vollständigen Positions-Messbereich des Sensors auf den begrenzten Teilbereich, der wie schon beim Ausführungsbeispiel der Fig. 5 20% des Messbereichs ausmacht, kann die durch den Grenzwert s1 bestimmte Entscheiderschwelle deutlich angehoben werden, ohne dass die Diagnose-Reserve r2 davon beeinträchtigt wird. Dies ist darauf zurückzuführen, dass die obere Grenze der Diagnose-Reserve r2 nun nicht mehr von dem kleinsten Funktionswert des normierten Primärstroms bestimmt wird, sondern von den kleinsten Funktionswerten innerhalb des Teilbereichs I. Diese liegen bezüglich ihrer Absolutwerte deutlich höher und werden von den Schnittpunkten der Primärstromfunktion mit den Lotgrenzen des Teilbereichs I gebildet. In Fig. 7 sind diese Schnittpunkte umkreist dargestellt.

Mit dem Grenzwert s1 gilt bezüglich der Bewertung, ob ein fehlerhafter Zustand vorliegt:
Befindet sich das Sensorausgangssignal epos innerhalb des Teilbereichs I und der Betrag des normierten Stroms ist größer als der Grenzwert s1, so befindet sich der Sensor im regulären, fehlerfreien Zustand.

Befindet sich das Sensorausgangssignal epos innerhalb des Teilbereichs I und der Betrag des normierten Stroms ist kleiner als der Grenzwert s1, so befindet sich der Sensor in einem fehlerhaften Zustand.

Indem das Sensorausgangssignal epos verwendet wird, um die Information, ob der Sensor sich in einem fehlerhaften Zustand befindet, zu plausibilisieren, sind die beiden Diagnose-Reserven r1, r2 gegenüber den erzielten Größen in Fig. 6 deutlich größer geworden, woraus eine Robustheitssteigerung des Diagnoseverfahrens resultiert. Es wird betont, dass die im Folgenden beschriebenen Ausführungsbeispiele nicht in den Anwendungsbereich der beigefügten Ansprüche fallen, und keine Ausführungsbeispiele der vorliegenden Erfindung sind. Die zuvor beschriebenen Ausführungsbeispiele erforderten zur Erfassung der Test- bzw. Diagnosegröße, also des Primärstroms |Iprim| oder der Primärspannung |Uprim|, stets einen deutlichen Schaltungsmehraufwand, wodurch zusätzliche Kosten entstehen. Diese aus ökonomischer Sicht unvorteilhaften Mehrkosten, lassen sich zumindest beim Typ II-Sensor weitestgehend dadurch vermeiden, indem auf die im Verlauf der Sekundärsignalverarbeitung auftretenden diskreten Signale esum, edif und / oder epos, dargestellt in Fig. 3, als Plausibilisierungsgrößen zurückgegriffen wird. Aus den verschiedenen Kombinationsmöglichkeiten der diskreten Sekundärsignale zueinander, sollen nachfolgend zwei Ausführungsbeispiele erläutert werden.

Das Summensignal esum und das Differenzsignal edif stehen im Signalverarbeitungsprozess des Typ II-Sensors zur Ermittlung des Positionswertes epos als diskrete Größen zur Verfügung. Insbesondere bei digitaler Verarbeitung dieser Größen, ist deren Weiterverarbeitung im Rahmen eines Diagnoseverfahrens eines Positionsgeberdefekts ohne Mehrkosten realisierbar. Nachfolgend soll mit Bezug zu Fig. 8 zunächst unter Verwendung der diskreten Größen esum und edif ein Ausführungsbeispiel eines Verfahrens zum Testen eines Sensors vorgestellt werden, das, obwohl es aufwandsarm und kostenneutral umgesetzt werden kann, mit ähnlichen Eigenschaften, wie die Verfahren der zuvor genannten Ausführungsbeispiele aufwarten kann.

Hierzu sind im Kennlinienfeld der Fig. 8 beispielhaft die Funktionsverläufe

$$\frac{|e_{dif}|}{|e_{dif_{max}}|} = f\left(\frac{RP}{RP_{max}}\right)$$

sowohl für den regulären, fehlerfreien Betriebsfall 2, sowie für den Fehlerzustand 3 des defekten Positionsgebers G, und

$$\frac{|e_{sum}|}{|e_{sum_{max}}|} = f\left(\frac{RP}{RP_{max}}\right)$$

ebenfalls für den regulären Betriebsfall 2' und den Fehlerzustand 3' dargestellt. Die Funktionsverläufe stellen das typische Verhalten dieses Sensortyps dar, wobei der Fehlerzustand in diesem Beispiel durch Entfernen des Positionsgebermagneten herbeigeführt wird. Die normierte Darstellung dient erneut dem vereinfachten Vergleich mit den Grafen der übrigen hier dargestellten Kennlinienfelder.

Das Verfahren basierend auf den Größen esum und edif lässt sich nun dadurch realisieren, indem mit einem Wertvergleicher das normierte Summensignal hinsichtlich der Größe des Betrages mit einem Grenzwert s1 verglichen wird sowie in einem weiteren Schritt ein ebensolcher Wertvergleich mit einem weiteren und unabhängigen Grenzwert s2 für das normierte Differenzsignal vorgenommen wird. Mit einer Fallunterscheidung kann sodann in einem folgenden Schritt festgestellt werden, ob beide Größen, das normierte Summensignal und das normierte Differenzsignal, kleiner als der jeweilige Grenzwert s1, s2 ausfallen. Diese Konstellation ist sodann der Indikator für einen defekten Positionsgeber G. Alle übrigen Konstellationen in Bezug auf die jeweiligen Grenzwerte s1, s2 zeigen einen regulären und fehlerfreien Betrieb des Sensors an.

Zusammengefasst ergeben sich mit den beiden als Entscheiderschwellen beispielhaft festgelegten Grenzwerten s1, s2 in Fig. 8 sowie den Funktionsverläufen folgende Grundsätze zum Bestimmen, ob der Sensor sich in einem fehlerhaften Zustand befindet:

Ist der normierte Betrag des Summensignals esum kleiner als sein zugehöriger Grenzwert s1 und der normierte Betrag des Differenzsignals edif kleiner als sein zugehöriger Grenzwert s2, so befindet sich der Sensor in einem fehlerhaften Zustand.

Befinden sich der normierte Betrag des Summensignals esum und der normierte Betrag des Differenzsignals edif bezüglich ihrer jeweiligen Grenzwerte s1, s2 in einem anderen Zustand als dem zuvor genannten, so befindet sich der Sensor im regulären, fehlerfreien Zustand.

Die Diagnose-Reserven stellen sich bei dem Ausführungsbeispiel der Fig. 8 aufgrund der angewandten Fallunterscheidung etwas anders dar, als bei den zuvor genannten Ausführungsbeispielen.

Mit der Diagnose-Reserve r1 und r1' in Fig. 8 wird der Sicherheitsabstand des Betrags des normierten Summensignals und der Sicherheitsabstand des Betrags des normierten Differenzsignals bezüglich ausbleibender Fehleranzeige trotz Fehlerzustands des Sensors angegeben. Die Diagnose-Reserven r1 und r1' sind an dieser Stelle gleichbedeutend, da jede einzelne darüber bestimmt, wie sicher eine ausbleibende Fehleranzeige trotz eingetretenen Fehlerzustands verhindert werden kann.

Die Diagnose- Reserve, mittels der man den Sicherheitsabstand bezüglich einer Fehleranzeige trotz regulären Betriebs angeben kann, wird bei diesem Diagnoseverfahren basierend auf geometrischen Abhängigkeiten ermittelt. Dabei gilt, wie durch Fig. 8 anschaulich wird, dass die kürzeste Strecke der vier Geradenstücke r2, r3, r4, r5 darüber bestimmt, wie groß die Reserve bezüglich einer Fehleranzeige trotz regulären Betriebs ausfällt. Da die Länge der Geradenstücke r2, r3, r4, r5 geometrisch invers mit den Diagnose-Reserven r1 und r1' verknüpft ist, gilt es auch hier wieder einen Kompromiss einzugehen bezüglich der Reserve einer Fehleranzeige trotz regulären Betriebs, beziehungsweise der Reserve bezüglich ausbleibender Fehleranzeige trotz Fehlerzustands des Sensors. Die Dimensionierung der Diagnose-Reserven in dem Ausführungsbeispiel der Fig. 8 ist dabei deutlich asymmetrisch erfolgt, wobei der Schwerpunkt auf eine hohe Reserve bezüglich einer Fehleranzeige trotz regulären Betriebs gelegt wurde.

Unter den diskreten Sekundärsignalen beim Typ II-Positionssensor eignet sich auch das Summensignal esum als zum Testen verwendete elektrische Größe, wobei im Verbund mit dem Sensorausgangssignal epos, das die vom Sensor erfasste Position wiedergibt, eine Plausibilisierung erfolgt. Dieses Ausführungsbeispiel wird mit Hinblick auf Fig. 9 deutlich. Das Summensignal esum stellt ebenso eine kostenneutrale Größe dar, die ohne materiellen Zusatzaufwand verwendet werden kann. Ähnlich wie in Zusammenhang mit den Figuren 5 und 7 soll auch in diesem Fall nicht das Sensorausgangssignal als solches sozusagen vollständig verarbeitet werden, sondern es genügt wiederum die Kenntnis, dass bei den hier behandelten Fehlerzuständen im Fehlerfall das Sensorausgangssignal epos stets nahezu die mittlere Position des gesamten Messbereichs anzeigt, um ein für das Diagnoseverfahren eindeutiges Unterscheidungskriterium zu erhalten. Aus dem Funktionsverlauf 2 für das normierte Summensignal 2 im regulären Betrieb und dem Funktionsverlauf 3 im Fehlerzustand des Sensors in Fig. 9 wird ersichtlich, dass das Sensorausgangssignal epos an dieser Stelle nicht nur eine ergänzende Information zur Erlangung von möglichst großen Diagnose-Reserven darstellt, sondern verhindert, dass es an den Randbereichen des Messbereichs systematisch zu Fehldiagnosen kommt. Dies wird anhand des Verlaufs des normierten Summensignals 2 bei regulärem Betrieb des Sensors im Vergleich zum normierten Summensignal im Fehlerzustand 3. Beide Funktionen haben im Messbereich des Sensors gemeinsame Funktionswerte beziehungsweise schneiden sich, so dass eine eindeutige Unterscheidbarkeit nicht über den gesamten Messbereich gegeben ist. Ein eindeutiges Unterscheidungskriterium wird aber durch eine Einschränkung des Testverfahrens auf den Teilbereich I möglich, denn in diesem eingeschränkten Intervall sind die Werte der beiden Funktionsverläufe 2, 3 stets ungleich.

Mit der Einschränkung auf den Teilbereich I und der Definition eines geeigneten Grenzwertes s1 als Entscheiderschwelle, lassen sich die Betriebszustände des Sensors folgendermaßen unterscheiden: Befindet sich das Sensorausgangssignal epos innerhalb des Teilbereichs I und das normierte Summensignal esum ist größer als der Grenzwert s1, so befindet sich der Sensor im regulären, fehlerfreien Zustand.

Befindet sich das Sensorausgangssignal epos innerhalb des Teilbereichs I und das normierte Summensignal esum ist kleiner als der Grenzwert s1, so befindet sich der Sensor in einem fehlerhaften Zustand.

Dank der Einschränkung des Positionsintervalls auf den Teilbereich I wird die obere Grenze der Diagnose-Reserve r2 auch an dieser Stelle wieder von den kleinsten Funktionswerten innerhalb des eingeschränkten Positionsintervalls bestimmt. Diese, wiederum umkreist dargestellt, werden bestimmt aus den Schnittpunkten des normierten Summensignals esum mit den Lotgrenzen des Teilbereichs I.

Mit der Diagnose-Reserve r2 in Fig. 9 erhält man dadurch einen in der Praxis mehr als ausreichenden Sicherheitsabstand des normierten Summensignals zum Grenzwert s1 und damit bezüglich einer Fehleranzeige trotz regulären Betriebs. Mit der Diagnose-Reserve r1 wird entsprechend der Sicherheitsabstand des normierten Summensignals bezüglich ausbleibender Fehleranzeige trotz Fehlerzustands angegeben. Für eine möglichst robuste Arbeitsweise des Verfahrens sollten die Diagnose-Reserven r1 und r2 wiederum beide möglichst groß ausfallen. Beide Größen verhalten sich auch bei diesem Ausführungsbeispiel invers zueinander, daher ist bezüglich der Festlegung des Grenzwerts s1 ein Kompromiss einzugehen.

**Patentansprüche**

1. Verfahren zum Testen eines Sensors mit einer Primärinduktivität (4), die von einer jeweils induktiv mit der Primärinduktivität (4) gekoppelten ersten und zweiten Sekundärinduktivität (5, 6) galvanisch getrennt ist, umfassend:

   - Berechnen eines Sensorausgangssignals (epos), wobei das Sensorausgangssignal (epos) von der Kopplung zwischen der Primärinduktivität (4) und der ersten Sekundärinduktivität (5) sowie zwischen der Primärinduktivität (4) und der zweiten Sekundärinduktivität (6) abhängig ist,
   - Bestimmen einer von dem Sensorausgangssignal (epos) verschiedenen ersten elektrischen Größe ($|Uprim|$, $|Iprim|$), insbesondere eines Zusatzsignals, des Sensors,
   - Vergleichen der ersten elektrischen Größe ($|Uprim|$, $|Iprim|$) mit einem ersten Grenzwert (s1), um zu bestimmen, ob der Sensor sich in einem fehlerhaften Zustand befindet, **dadurch gekennzeichnet,**
   **dass** die Primärinduktivität (4) durch einen Wechselstromgenerator gespeist wird, wobei die erste elektrische Größe ($|Uprim|$, $|Iprim|$) durch den Betrag der an der Primärinduktivität (4) auftretenden Spannung ($|Uprim|$) gebildet wird, oder
   **dass** die Primärinduktivität (4) durch einen Wechselspannungsgenerator gespeist wird, wobei

   - die erste elektrische Größe ($|Uprim|$, $|Iprim|$) durch den Betrag des durch die Primärinduktivität (4) fließenden Stroms ($|Iprim|$) gebildet wird.

2. Verfahren gemäß einem der vorhergehenden Ansprüche, **dadurch gekennzeichnet, dass** eine zweite elektrische Größe (esum, edif) mit einem zweiten Grenzwert (s2) verglichen wird, um zu bestimmen, ob der Sensor sich in einem fehlerhaften Zustand befindet.

3. Verfahren gemäß einem der vorhergehenden Ansprüche, **dadurch gekennzeichnet, dass** das Sensorausgangssignal (epos) verwendet wird, um die Information, ob der Sensor sich in einem fehlerhaften Zustand befindet, zu plausibilisieren.

4. Verfahren gemäß Anspruch 3, **dadurch gekennzeichnet, dass** zur Plausibilisierung des Zustands des Sensors ausgewertet wird, ob innerhalb der möglichen Werte des Sensorausgangssignals (epos) im Messbereich des Sensors das Sensorausgangssignal (epos) einem Wert aus einem zusammenhängenden Teilbereich (I) dieser Werte entspricht.

**5.** Verfahren gemäß Anspruch 4, **dadurch gekennzeichnet, dass** der Teilbereich (I) die Mitte des Messbereichs des Sensors einschließt, sowie vorzugsweise zur Mitte spiegelsymmetrisch ausgedehnt ist, wobei der Teilbereich (I) insbesondere weniger als 40%, vorzugsweise weniger als 30% des Messbereichs einnimmt.

**6.** Verfahren gemäß dem Anspruch 2, und optional zusätzlich gemäß einem der Ansprüche 3 bis 5, **dadurch gekennzeichnet, dass** der erste Grenzwert (s1) oder zumindest einer des ersten Grenzwerts (s1) und des zweiten Grenzwerts (s2) durch einen über den Messbereich des Sensors konstanten Wert gebildet wird, der zwischen dem Wert der ersten elektrischen Größe im Fall eines fehlerhaften Zustands und allen oder den durch den Teilbereich (I) eingegrenzten Werten der elektrischen Größe im Fall eines nicht fehlerhaften Zustands liegt.

**7.** Verfahren gemäß einem der vorhergehenden Ansprüche, **dadurch gekennzeichnet, dass** die jeweilige erste elektrische Größe ($|\underline{U}prim|$, $|\underline{I}prim|$) auf ihren innerhalb des Messbereichs des Sensors maximal möglichen Wert bezogen wird.

**8.** Verfahren gemäß einem der vorhergehenden Ansprüche, **dadurch gekennzeichnet, dass** zum Berechnen des Sensorausgangssignals (epos) die Signale, insbesondere Spannungen, der ersten und zweiten Sekundärinduktivität (5, 6) voneinander subtrahiert werden.

**9.** Verfahren gemäß Anspruch 8, **dadurch gekennzeichnet, dass** das Sensorausgangssignal (epos) berechnet wird, indem die voneinander subtrahierten Signale eine Wechselspannung bilden, deren Amplitude mittels eines phasenempfindlichen Gleichrichters gleichgerichtet wird oder indem die voneinander subtrahierten Signale durch ihre Summe dividiert werden.

**10.** Vorrichtung zur Durchführung eines Verfahrens nach einem der vorhergehenden Ansprüche, aufweisend einen Speicher und einen Prozessor, wobei eines der Verfahren gemäß Anspruch 1 bis in Form eines Computerprogramms in dem Speicher hinterlegt und der Prozessor zur Ausführung des Verfahrens ausgebildet ist, wenn das Computerprogramm aus dem Speicher in den Prozessor geladen ist.

**11.** Sensor, umfassend einen, insbesondere magnetischen, Geber (G), eine Primärinduktivität (4), die von einer jeweils induktiv mit der Primärinduktivität (4) gekoppelten ersten und zweiten Sekundärinduktivität (5, 6) galvanisch getrennt ist, sowie eine Vorrichtung gemäß Anspruch 10.

**Claims**

**1.** Method for testing a sensor with a primary inductor (4) which is galvanically isolated from first and second secondary inductors (5, 6) which are respectively coupled inductively to the primary inductor (4), comprising:

- calculating a sensor output signal (epos), wherein the sensor output signal (epos) is dependent on the coupling between the primary inductor (4) and the first secondary inductor (5) as well as that between the primary inductor (4) and the second secondary inductor (6),
- determining a first electrical variable ($|\underline{U}prim|$, $|\underline{I}prim|$), which is different from the sensor output signal (epos), in particular an additional signal, of the sensor,
- comparing the first electrical variable ($|\underline{U}prim|$, $|\underline{I}prim|$) with a first limiting value (s1) in order to determine whether the sensor is in a faulty state, **characterized in that** the primary inductor (4) is fed by an AC generator, wherein the first electrical variable ($|\underline{U}prim|$, $|\underline{I}prim|$) is formed by the absolute value of the voltage ($|\underline{U}prim|$) occurring at the primary inductor (4), or

**in that** the primary inductor (4) is fed by an AC voltage generator, wherein

- the first electrical variable ($|\underline{U}prim|$, $|\underline{I}prim|$) is formed by the absolute value of the current ($|\underline{I}prim|$) flowing through the primary inductor (4).

**2.** Method according to one of the preceding claims, **characterized in that** a second electrical variable (esum, edif) is compared with a second limiting value (s2) in order to determine whether the sensor is in a faulty state.

**3.** Method according to either of the preceding claims, **characterized in that** the sensor output signal (epos) is used to check the plausibility of the information as to whether the sensor is in a faulty state.

**4.** Method according to Claim 3, **characterized in that** in order to check the plausibility of the state of the sensor it is evaluated whether, within the possible values of the sensor output signal (epos) in the measuring range of the sensor, the sensor output signal (epos) corresponds to a value from an associated partial range (I) of these values.

**5.** Method according to Claim 4, **characterized in that** the partial range (I) includes the centre of the measuring range of the sensor, and preferably extends mirror-symmetrically with respect to the centre, wherein the partial range (I) in particular takes up less than 40%, preferably less than 30%, of the measuring range.

**6.** Method according to Claim 2, and optionally additionally according to one of Claims 3 to 5, **characterized in that** the first limiting value (s1) or at least one of the first limiting value (s1) and the second limiting value (s2) is formed by a value which is constant over the measuring range of the sensor and which lies between the value of the first electric variable in the case of a faulty state and all or the values of the electrical variable which are delimited by the partial range (I) in the case of a non-faulty state.

**7.** Method according to one of the preceding claims, **characterized in that** the respective first electrical variable (|Uprim|, |Iprim|) is related to its maximum possible value within the measuring range of the sensor.

**8.** Method according to one of the preceding claims, **characterized in that**, in order to calculate the sensor output signal (epos) the signals, in particular voltages, of the first and second secondary inductors (5, 6) are subtracted from one another.

**9.** Method according to Claim 8, **characterized in that** the sensor output signal (epos) is calculated **in that** the signals which are subtracted from one another form an AC voltage whose amplitude is rectified by means of a phase-sensitive rectifier, or **in that** the signals which are subtracted from one another are divided by their sum.

**10.** Device for carrying out a method according to one of the preceding claims, comprising a memory and a processor, wherein one of the methods according to Claims 1 to 9 is stored in the form of a computer program in the memory, and the processor is designed to execute the method when the computer program is loaded into the processor from the memory.

**11.** Sensor comprising an, in particular magnetic, encoder (G), a primary inductor (4), which is galvanically isolated from first and second secondary inductors (5, 6) which are respectively coupled inductively to the primary inductor (4), and a device according to Claim 10.

**Revendications**

**1.** Procédé permettant de tester un capteur comprenant une inductance primaire (4) qui est séparée galvaniquement d'une première et d'une deuxième inductance secondaire (5, 6), respectivement couplées par induction à l'inductance primaire (4), comprenant les étapes consistant à :

- calculer un signal de sortie de capteur (epos), le signal de sortie de capteur (epos) dépendant du couplage entre l'inductance primaire (4) et la première inductance secondaire (5) ainsi qu'entre l'inductance primaire (4) et la deuxième inductance secondaire (6),
- déterminer une première grandeur électrique (|Uprim|, |Iprim|), différente du signal de sortie de capteur (epos), en particulier un signal supplémentaire, du capteur,
- comparer la première grandeur électrique (|Uprim|, |Iprim|) avec une première valeur limite (s1) afin de déterminer si le capteur se trouve dans un état défectueux,

**caractérisé**

**en ce que** l'inductance primaire (4) est alimentée par un générateur de courant alternatif, la première grandeur électrique (|Uprim|, |Iprim|) étant formée par la quantité de la tension (|Uprim|) apparaissant au niveau de l'inductance primaire (4), ou

**en ce que** l'inductance primaire (4) est alimentée par un générateur de tension alternative, dans lequel

- la première grandeur électrique (|Uprim|, |Iprim|) est formée par la quantité du courant (|Iprim|) circulant à travers l'inductance primaire (4).

**2.** Procédé selon l'une quelconque des revendications précédentes, **caractérisé en ce qu'**une deuxième grandeur électrique (esum, edif) est comparée avec une deuxième valeur limite (s2) afin de déterminer si le capteur se trouve dans un état défectueux.

**3.** Procédé selon l'une quelconque des revendications précédentes, **caractérisé en ce que** le signal de sortie de capteur (epos) est utilisé pour contrôler la plausibilité de l'information indiquant si le capteur se trouve dans un état défectueux.

**4.** Procédé selon la revendication 3, **caractérisé en ce que** pour le contrôle de plausibilité de l'état du capteur, on évalue si à l'intérieur des valeurs possibles du signal de sortie de capteur (epos) dans la plage de mesure du capteur, le signal de sortie de capteur (epos) correspond à une valeur provenant d'une plage partielle cohérente (I) de ces valeurs.

**5.** Procédé selon la revendication 4, **caractérisé en ce que** la plage partielle (I) inclut le milieu de la plage de mesure du capteur, et s'étend de préférence en symétrie par rapport au milieu, la plage partielle (I) occupant en particulier moins de 40 %, de préférence moins de 30 % de la plage de mesure.

**6.** Procédé selon la revendication 2, et en option également selon l'une quelconque des revendications 3 à 5, **caractérisé en ce que** la première valeur limite (s1), ou du moins l'une de la première valeur limite (s1) et de la deuxième valeur limite (s2), est formée par une valeur constante dans la plage de mesure du capteur et qui est située entre la valeur de la première grandeur électrique dans le cas d'un état défectueux et toutes les valeurs ou les valeurs limitées par la plage partielle (I) de la grandeur électrique dans le cas d'un état non défectueux.

**7.** Procédé selon l'une quelconque des revendications précédentes, **caractérisé en ce que** la première grandeur électrique ($|\underline{U}prim|$, $|\underline{I}prim|$) respective se rapporte à sa valeur maximale possible à l'intérieur de la plage de mesure du capteur.

**8.** Procédé selon l'une quelconque des revendications précédentes, **caractérisé en ce que** pour le calcul du signal de sortie de capteur (epos), les signaux, en particulier les tensions, de la première et de la deuxième inductance secondaire (5, 6), sont soustraits l'un de l'autre.

**9.** Procédé selon la revendication 8, **caractérisé en ce que** le signal de sortie de capteur (epos) est calculé **en ce que** les signaux soustraits l'un de l'autre forment une tension alternative dont l'amplitude est redressée au moyen d'un redresseur à sensibilité en phase, ou **en ce que** les signaux soustraits l'un de l'autre sont divisés par leur somme.

**10.** Dispositif permettant d'exécuter un procédé selon l'une quelconque des revendications précédentes, présentant une mémoire et un processeur, dans lequel l'un des procédés selon les revendications 1 à 9 est mémorisé sous la forme d'un programme informatique dans la mémoire, et le processeur est réalisé pour exécuter le procédé si le programme informatique est chargé de la mémoire dans le processeur.

**11.** Capteur, comprenant un générateur (G), en particulier magnétique, une inductance primaire (4) qui est séparée galvaniquement d'une première et d'une deuxième inductance secondaire (5, 6), respectivement couplées par induction à l'inductance primaire (4), ainsi qu'un dispositif selon la revendication 10.

**Fig. 1**

**Fig. 2**

**Fig. 3**

**Fig. 4**

**Fig. 5**

**Fig. 6**

**Fig. 7**

**Fig. 8**

**Fig. 9**

**IN DER BESCHREIBUNG AUFGEFÜHRTE DOKUMENTE**

**In der Beschreibung aufgeführte Patentdokumente**

- EP 2707731 A2